# EUROPEAN PATENT SPECIFICATION

(11) **EP 4 662 269 B1**
(45) Date of publication and mention of the grant of the patent: **04.11.2026**
(21) Application number: 24725617.5
(22) Date of filing: 16.04.2024
(51) Int. Cl.: C08J 3/12, B29B 9/12, C08J 3/24, C08K 5/13, C08K 5/14, H01B 3/44

(54) **PELLET**
PELLET
PASTILLE

(43) Date of publication of application: 17.12.2025
(73) Proprietor: Sumitomo Electric Industries, Ltd., Osaka-shi, Osaka 541-0041 (JP)
(72) Inventor: HOSOMIZU, Kohei, Osaka-shi, Osaka 5410041 (JP); YAMANA. Takeshi, Osaka-shi, Osaka 5410041 (JP); IZUMI, Naoki, Osaka-shi, Osaka 5410041 (JP); YAMAZAKI, Takanori, Osaka-shi, Osaka 5410041 (JP); YAMASAKI, Satoshi, Osaka-shi, Osaka 5410041 (JP)
(74) Representative: Grünecker Patent- und Rechtsanwälte PartG mbB
(86) International application number: PCT/JP2024/015066
(87) International publication number: WO 2025/220096

(56) References cited:
- WO-A1-2014/051954
- WO-A1-2015/015382
- US-A1- 2008 207 843
- US-A1- 2020 273 598
- US-A1- 2020 279 672

## Description

### [Technical Field]

The present disclosure relates to a pellet.

### [Background Art]

Cross-linked polyethylene is widely used for an insulation layer of a power cable (e.g., PTL. 1).

The insulation layer is formed using a pellet which includes a resin composition containing polyethylene and a cross-linking agent.

### [Citation List]

### [Patent Literature]

PTL. 1: Japanese Patent Laid-Open Publication No. 2020-132817 WO2015015382A1 also relates to cross-linked polyethylene pellets.

### [Summary of Invention]

According to an aspect of the present disclosure, there is provided a pellet including a resin component containing unsaturated polyethylene, and a cross-linking agent,
the pellet including a central portion and an outer circumferential portion located on an outer circumference of the central portion,
wherein the central portion and the outer circumferential portion satisfy expression (1): $0.32 ≦ \left(C/A\right) / \left(D/B\right) ≦ 0.91$ (1)
where A indicates a content, expressed in mass%, of the cross-linking agent per 100 mass% of the resin component included in the central portion, B indicates a content, expressed in mass% of the cross-linking agent per 100 mass% of the resin component included in the outer
circumferential portion, C indicates a content of carbon-carbon double bond per 1000 carbon atoms in the resin component included in the central portion, and D indicates a content of carbon-carbon double bond per1000 carbon atoms in the resin component included in the outer circumferential portion.

### Brief Description of Drawings

[Fig.1] FIG.1 is a schematic configuration diagram of a pellet according to an embodiment of the present disclosure
[Fig.2] FIG.2 is a diagram for explaining an evaluation method in the accelerated degradation test of the pellet.
[Fig.3] FIG.3 is a diagram illustrating the expected temperature changes in the outer circumferential portion and the central portion during cooling of Sample 16.
[Fig.4] FIG.4 is a diagram illustrating the expected temperature changes in the outer circumferential portion and the central portion during cooling of Sample 18.
[Fig.5]FIG. 5 is a diagram illustrating the expected temperature changes in the outer circumferential portion and the central portion during cooling of Sample 20.
[Fig.6]FIG. 6 is a diagram illustrating changes in a content of the cross-linking agent and a content of carbon-carbon double bond in the depth direction for a pellet of Sample 17.

### Description of Embodiments

### Problem to be Solved by the Disclosure

A power cable has an electrical insulation layer. Hereinafter, the electrical insulation layer will be referred to as an "insulation layer". The insulation layer is formed from a pellet including an insulation resin and a cross-linking agent. The insulation resin contains, for example, unsaturated polyethylene. The pellet is produced and stored before the power cable is produced. When the pellet is stored for a long term, the pellet is exposed to air for a long term. When the pellet is exposed to air for a long term, the insulation resin may be partially cross-linked in a surface layer of the pellet by the cross-linking agent included in the surface layer of the pellet to form a cross-linked contaminant. Furthermore, the carbon-carbon double bonds in the unsaturated polyethylene as a resin component of the pellet are reactive. Therefore, when the pellet is exposed to air for a long term, the resin component may degrade in the surface layer of the pellet, starting from the carbon-carbon double bonds in the resin component. In this case, contaminants may be formed in the pellet. The pellet is heated during the production of the insulation layer of the power cable. When the pellet is heated, the insulation resin included in the pellet is cross-linked by the cross-linking agent. Accordingly, the power cable has a cross-linked insulation layer. However, when a cross-linked insulation layer is formed from a pellet containing a contaminant, the cross-linked insulation layer contains the contaminant. The inventor has found that the contaminant causes a reduction in the electrical insulation of the insulation layer when the pellet is stored for a long term.

In addition, the present inventor has found that problems described below also arise from the distribution of the cross-linking agent and carbon-carbon double bonds in the pellet. With excessively small amount of cross-linking agent outside the pellet, during the extrusion step where the linear speed of extruding the cable core is increased, the cross-linking agent is not sufficiently dispersed in an extruder, generating portions with insufficient cross-linking agent. In the portion with insufficient cross-linking agent, the cross-linking reaction by the cross-linking agent is less likely to occur during the cross-linking step. Alternatively, with excessively less carbon-carbon double bond outside the pellet, during the extrusion step where the linear speed is increased, portions with insufficient carbon-carbon double bond are generated in an extruder. In the portion with insufficient carbon-carbon double bond, the cross-linking reaction by the carbon-carbon double bond is less likely to occur during the cross-linking step. In both cases mentioned above, the degree of cross-linking is lower in some portions of the insulation layer of the power cable. As a result, when the insulation layer is heated, excessive elongation may occur in the insulation layer.

An object of the present disclosure is to provide an improved pellet including an insulation resin and a cross-linking agent. Particularly, an object of the present disclosure is to provide a pellet which can be stored for a long term and can suppress local decrease in the degree of cross-linking in the insulation layer.

### [Advantageous Effect of the Disclosure]

According to the present disclosure, the long-term preservability of the pellet can be improved, and the local decrease in the degree of cross-linking in the insulation layer can be suppressed.

### [Embodiments of the Disclosure]

Next, embodiments of the present disclosure will be listed and described.
[1] A pellet according to an aspect of the present disclosure is a pellet including a resin component containing unsaturated polyethylene and a cross-linking agent,
   the pellet including a central portion and an outer circumferential portion located on an outer circumference of the central portion,
      wherein the outer circumferential portion is a region where the content of the cross-linking agent is not more than an average value of the content of the cross-linking agent in the entire pellet, and the central portion is a region where the content of the cross-linking agent is more than the average value,
   wherein the central portion and the outer circumferential portion satisfy expression (1): $0.32 ≦ \left(C/A\right) / \left(D/B\right) ≦ 0.91$ (1)
   where
   A indicates a content, expressed in mass%, of the cross-linking agent per 100 mass% of the resin component included in the central portion,
   B indicates a content, expressed in mass%, of the cross-linking agent per 100 mass% of the resin component included in the outer circumferential portion,
   C indicates a content of carbon-carbon double bond per 1000 carbon atoms in the resin component included in the central portion,
   D indicates a content of carbon-carbon double bond per 1000 carbon atoms in the resin component included in the outer circumferential portion,

   wherein A and B are calculated by measuring a cut surface, cut out from the pellet, by Fourier transform infrared spectroscopy or Raman scattering method, and
   wherein C and D are calculated by measuring a cut surface, cut out from the pellet, by Fourier transform infrared spectroscopy.
   This configuration can improve the long-term preservability of the pellet and suppress the local decrease in the degree of cross-linking in the insulation layer.
[2] In the pellet according to [1],
   the central portion and the outer circumferential portion satisfy expression (2): $0.32 ≦ B / A ≦ 0.91$ (2). This configuration can stably improve the long-term preservability of the pellet and stably suppress the local decrease in the degree of cross-linking in the insulation layer.
[3] In the pellet according to [1] or [2],
   the central portion and the outer circumferential portion satisfy expression (3): $0.66 ≦ D / C ≦ 1.89$ (3). This configuration can stably improve the long-term preservability of the pellet and stably suppress the local decrease in the degree of cross-linking in the insulation layer.
[4] In the pellet according to any one of [1] to [3],
   the outer circumferential portion satisfies the following expression: $1.45 ≦ B ≦ 2.86$ This configuration can stably improve the long-term preservability of the pellet and stably suppress the local decrease in the degree of cross-linking in the insulation layer.
[5] In the pellet according to any one of [1] to [4],
   the outer circumferential portion satisfies the following expression: $0.25 ≦ D ≦ 0.70$ This configuration can stably improve the long-term preservability of the pellet and stably suppress the local decrease in the degree of cross-linking in the insulation layer.
[6] In the pellet according to any one of [1] to [5],
   a thickness of the outer circumferential portion is 0.1 mm or more and 1 mm or less.

This configuration can stably improve the long-term preservability of the pellet and stably suppress the local decrease in the degree of cross-linking in the insulation layer.

A configuration in accordance with [1] to [6] enables stable determination of C and D.

### [Details of the Embodiment of the Disclosure]

Next, an embodiment of the present disclosure will be described below. The present disclosure is not limited to these exemplifications, but intended to be indicated by claims and encompass all the changes which fall within the claimed scope.

### (Embodiment 1)

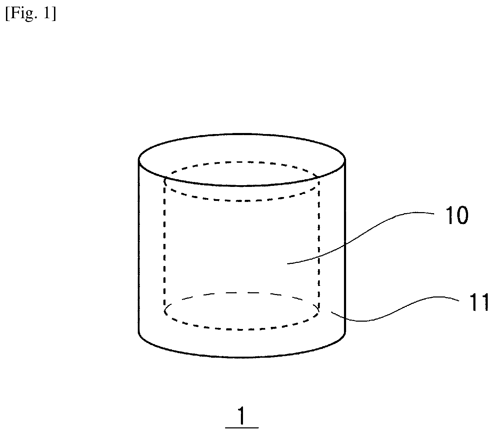

FIG. 1 illustrates the pellet 1 of Embodiment 1. The pellet 1 includes a central portion 10 and an outer circumferential portion 11. The outer circumferential portion 11 is located outside the central portion 10.

The pellet 1 includes a resin component containing unsaturated polyethylene, and a cross-linking agent. The unsaturated polyethylene as a resin component contains, at least in part, carbon-carbon double bonds (hereinafter sometimes referred to as C=C bonds). The unsaturated polyethylene is, for example, unsaturated low density polyethylene (unsaturated LDPE). The cross-linking agent is, for example, an organic peroxide. The pellet 1 also includes an additive. The additive is, for example, an inorganic filler, an antioxidant, or a lubricant. Since the cross-linking agent and the additive are disclosed, for example, in Japanese Patent Laid-Open Publication No. 2020-132819, US2020/279672A, Japanese Patent Laid-Open Publication No. 2020-132818, US2020/273598A, Japanese Patent Laid-Open Publication No. 2020-132817, US2020/270426A, Japanese Patent Laid-Open Publication No. 2019-189842, and US2021/032434A, they are not explained here.

The central portion 10 and the outer circumferential portion 11 satisfy expression (1): $0.32 ≦ \left(C/A\right) / \left(D/B\right) ≦ 0.91$ (1) where
A indicates a content, expressed in mass%, of the cross-linking agent per 100 mass% of the resin component included in the central portion 10,
B indicates a content, expressed in mass%, of the cross-linking agent per 100 mass% of the resin component included in the outer circumferential portion 11,
C indicates a content of carbon-carbon double bond per 1000 carbon atoms in the resin component included in the central portion 10, and
D indicates a content of carbon-carbon double bond per 1000 carbon atoms in the resin component included in the outer circumferential portion 11.

As described above, since the central portion 10 and the outer circumferential portion 11 satisfy expression (1), the long-term preservability of the pellet 1 can be improved and the local decrease in the degree of cross-linking can be suppressed in the insulation layer of the power cable.

The pellet 1 is produced by a coating method. The coating method includes the following steps:
· a resin preparation step,
· a first molding step, and
· a second molding step.

### (Resin preparation step)

First, in the resin preparation step, monomers are polymerized by a high-pressure method to prepare unsaturated polyethylene (unsaturated LDPE) as a resin component. The monomer is, for example, ethylene. At this time, a content of carbon-carbon double bond in the unsaturated polyethylene as the resin component is adjusted by at least any one of the following: using a chain transfer agent, adjusting polymerization conditions (temperature, pressure), and the like.

After the resin components are prepared, the first composition and the second composition are prepared. The first composition is for forming the central portion 10. The second composition is for forming the outer circumferential portion 11. The first composition and the second composition include the above-mentioned unsaturated polyethylene and cross-linking agent. In the resin preparation step of this embodiment, the first composition and the second composition are configured in advance to respectively make the central portion 10 and the outer circumferential portion 11 satisfy the above-mentioned expression (1).

### (First molding step)

Subsequent to the resin preparation step, a first molding step is performed. First, the first composition is heated, for example, at 80°C to produce a molten first composition. The molten first composition is extruded using an extruder to produce a linear first composition. Subsequently, the linear first composition is cut into a predetermined length. Accordingly, a granular molded resin is formed. Subsequently, the granular molded resin is allowed to cool naturally, for example, in an air at 25°C. The granular molded resin corresponds to the central portion 10.

### (Second molding step)

Subsequent to the first molding step, the second molding step is performed. First, the second composition is heated, for example, at 80°C to produce a molten second composition. Subsequently, the molten second composition is provided around the central portion 10 to form an outer circumferential portion 11 around the central portion 10. The outer circumferential portion 11 may be formed, for example, by applying or spraying the molten second composition onto the central portion 10. The second composition may be provided a plurality of times to the central portion 10 so that the outer circumferential portion 11 has a predetermined thickness. Subsequently, the second composition is allowed to cool naturally, for example, in an air at 25°C. Accordingly, the pellet 1 of Embodiment 1 is obtained.

Thus, the pellet of Embodiment 1 has the outer circumferential portion 11 including the second composition around the central portion 10 including the first composition. The central portion 10 and the outer circumferential portion 11 of the pellet 1 satisfy the above-mentioned expression (1).

### (Embodiment 2)

Similar to the pellet 1 of Embodiment 1, the pellet 1 of Embodiment 2 has the central portion 10 and the outer circumferential portion 11. The pellet 1 of Embodiment 2 is produced by a thermal diffusion method. The thermal diffusion method includes the following steps:
· a resin preparation step,
· a molding step, and
· a cooling step.

### (Resin preparation step)

First, in the same manner as in Embodiment 1, unsaturated polyethylene is prepared as a resin component.

After the resin component is prepared, a first composition is prepared. The first composition includes unsaturated polyethylene and a cross-linking agent.

### (Molding step)

Subsequent to the resin preparation step, a molding step is performed. In the molding step, the first composition is firstly heated to produce a molten first composition. For example, the first composition is heated to 80°C to produce a molten first composition. Subsequently, the molten first composition is extrusion molded to produce the first composition that is linear at high temperature. Subsequently, the first composition that is linear at high temperature is cut into a desired length to form the pellet 1 at high temperature.

### (Cooling step)

Subsequent to the molding step, a cooling step is performed. The cooling step includes the following substeps:
· a primary cooling substep, and
· a secondary cooling substep.

### (Primary cooling substep)

In the primary cooling substep, a surface of the pellet 1 at high temperature is rapidly cooled. Specifically, in the primary cooling substep, a fluid at a primary cooling temperature is supplied to the surface of the pellet 1 at high temperature for a predetermined time to rapidly cool the surface of the pellet 1. For example, in the primary cooling substep, CO₂ gas at 5°C is blown to the pellet 1 at high temperature for 30 seconds for rapid cooling. Rapid cooling generates a temperature difference between the central portion 10 and the outer circumferential portion 11 of the pellet 1. The temperature of the fluid and the time for blowing the fluid can be appropriately adjusted.

### (Secondary cooling substep)

The secondary cooling substep is performed immediately after the primary cooling substep. In the secondary cooling substep, the pellet 1 is placed in an air at the secondary cooling temperature. The secondary cooling temperature is, for example, 10°C to 40°C. Accordingly, the pellet 1 is gradually cooled. When the pellet is gradually cooled, the temperature difference between the central portion 10 and the outer circumferential portion 11 of the pellet 1 is maintained for a certain period. Due to this temperature difference, the cross-linking agent thermally diffuses in the pellet 1. Specifically, the cross-linking agent diffuses from the cooled outer circumferential portion 11 to the central portion 10 at high temperature. In this event, at least one of the secondary cooling temperature and the secondary cooling time is adjusted so that the central portion 10 and the outer circumferential portion 11 satisfy expression (2): $0.32 ≦ B / A ≦ 0.91$ (2). On the other hand, since the carbon-carbon double bonds in the resin component do not thermally diffuse, the content of carbon-carbon double bond in the resin component in the central portion 10 is the same as that in the outer circumferential portion 11. That is, C ≒ D.
As a result, the central portion 10 and the outer circumferential portion 11 in the pellet 1 satisfy the above-mentioned expression (1).

The contents (A and B) of the cross-linking agent in the central portion 10 and the outer circumferential portion 11 can be measured by Fourier transform infrared spectroscopy (FT-IR) or Raman scattering method.

The contents (C and D) of carbon-carbon double bond in the resin component in the central portion 10 and the outer circumferential portion 11 can be measured by FT-IR method.

An outer diameter and a volume of the pellet 1 can be appropriately set.

### (Summary of Embodiments)

Since 0.32 ≦ (C/A)/(D/B), the content of the cross-linking agent in the outer circumferential portion 11 is not excessively less than the content of the cross-linking agent in the central portion 10, and the content of carbon-carbon double bond in the resin component in the outer circumferential portion 11 is not excessively more than the content of carbon-carbon double bond in the resin component in the central portion 10.

Since the content of the cross-linking agent in the outer circumferential portion 11 is not excessively less, the cross-linking agent can be sufficiently dispersed in an extruder, suppressing generation of portions with insufficient cross-linking agent, during the extrusion step where the linear speed is increased. Accordingly, the cross-linking reaction by the cross-linking agent can uniformly occur in the cross-linking step. As a result, local decrease in the degree of cross-linking in the insulation layer can be suppressed.

Since the content of carbon-carbon double bond in the resin component in the outer circumferential portion 11 is not excessively more, degradation of the resin component starting from the reactive carbon-carbon double bond in the surface layer of the pellet 1 can be suppressed, even when the pellet 1 is exposed to air for a long term. Accordingly, generation of contaminants in the cross-linked insulation layer can be suppressed. That is, the long-term preservability of the pellet 1 can be improved.

On the other hand, since (C/A)/(D/B) ≦ 0.91, the content of the cross-linking agent in the outer circumferential portion 11 is less than the content of the cross-linking agent in the central portion 10, and the content of carbon-carbon double bond in the resin component in the outer circumferential portion 11 is not excessively less than the content of carbon-carbon double bond in the resin component in the central portion 10.

Since the content of the cross-linking agent in the outer circumferential portion 11 is less than the content of the cross-linking agent in the central portion 10, the cross-linking by the cross-linking agent can be suppressed in some portions of the surface layer of the pellet 1 even when the pellet 1 is exposed to air for a long term. Accordingly, generation of contaminants in the cross-linked insulation layer can be suppressed. That is, the long-term preservability of the pellet 1 can be improved.

Since the content of carbon-carbon double bond in the resin component in the outer circumferential portion 11 is not excessively less, the carbon-carbon double bonds can be sufficiently dispersed in an extruder, suppressing generation of portions with insufficient carbon-carbon double bonds, during the extrusion step where the linear speed is increased. Accordingly, the cross-linking reaction by the carbon-carbon double bond can uniformly occur in the cross-linking step. As a result, local decrease in the degree of cross-linking in the insulation layer can be suppressed.

### Examples

Next, examples according to the present disclosure will be described. These examples are illustrative of the present disclosure, and the present disclosure is not limited by these examples.

### (1) Samples 1 to 8 of pellets

Samples 1 to 8 were produced using the above-mentioned coating method. Table 1 shows the conditions for the resin preparation step, the first molding step, and the second molding step in the coating method. Samples 1 to 8 include unsaturated low density polyethylene (hereinafter also referred to simply as LDPE) and the cross-linking agent described below.
· a cross-linking agent CA1: dicumyl peroxide (hereinafter also referred to as DCP).

| | | | Sample | | | | | | | |
|---|---|---|---|---|---|---|---|---|---|---|
| | | | 1 | 2 | 3 | 4 | 5 | 6 | 7 | 8 |
| Resin preparation step | First resin composition | Content of LDPE (mass%) | 100 | | | | | | | |
| | | Content of C=C bond per 1000 carbon atoms in LDPE: C | 0.37 | | | | | | | |
| | | Type of cross-linking agent | CA1 | | | | | | | |
| | | Content of cross-linking agent per 100 mass% of LDPE (mass%): A | 6 | 5.25 | 4.5 | 3.75 | 3.38 | 3.15 | 3 | 2.25 |
| | Second resin composition | Content of LDPE (mass%) | 100 | | | | | | | |
| | | Content of C=C bond per 1000 carbon atoms in LDPE: D | 0.37 | | | | | | | |
| | | Type of cross-linking agent | CA1 | | | | | | | |
| | | Content of cross-linking agent per 100 mass% of LDPE (mass%): B | 0 | 0.75 | 1.5 | 2.25 | 2.52 | 2.86 | 3 | 3.75 |
| First molding step | Production condition | Temperature of first resin composition during extrusion (°C) | 80 | | | | | | | |
| | State of central portion 10 | Shape | Cylindrical | | | | | | | |
| | | Diameter (mm) | 2.4 | | | | | | | |
| | | Length (mm) | 2.4 | | | | | | | |
| | | Volume (mm³) | 10.8 | | | | | | | |
| Second molding step | Production condition | Temperature of second resin composition during application (°C) | 80 | | | | | | | |
| | | Method of forming outer circumferential portion 11 | Application | | | | | | | |
| | State of outer circumferential portion 11 | Thickness (mm) | 0.3 | | | | | | | |
| | | Volume (mm³) | 10.3 | | | | | | | |

### (Content of carbon-carbon double bond)

As for Samples 1 to 8, the same LDPE was blened as a raw material for the resin component in the first resin composition and the second resin composition. The contents of carbon-carbon double bond per 1000 carbon atoms in LDPE blended in Samples 1 to 8 were measured FT-IR, and determined based on a calibration curve prepared using as a standard sample LDPE in which the content of carbon-carbon double bond is known by ¹H nuclear magnetic resonance (¹H-NMR) analysis.

### (Evaluation)

Samples 1 to 8 were evaluated by the accelerated degradation test, hot set tests 1 and 2 described below.

### (Evaluation method 1: Accelerated degradation test)

The pellets of Samples 1 to 8 were evaluated by the accelerated degradation test.

In the accelerated degradation test, each pellet was stored in a thermoregulated chamber. The storage conditions are as follows:
· temperature in thermoregulated chamber: 80°C
· atmosphere in thermoregulated chamber: air
· time for storage in thermoregulated chamber: 48 hours.

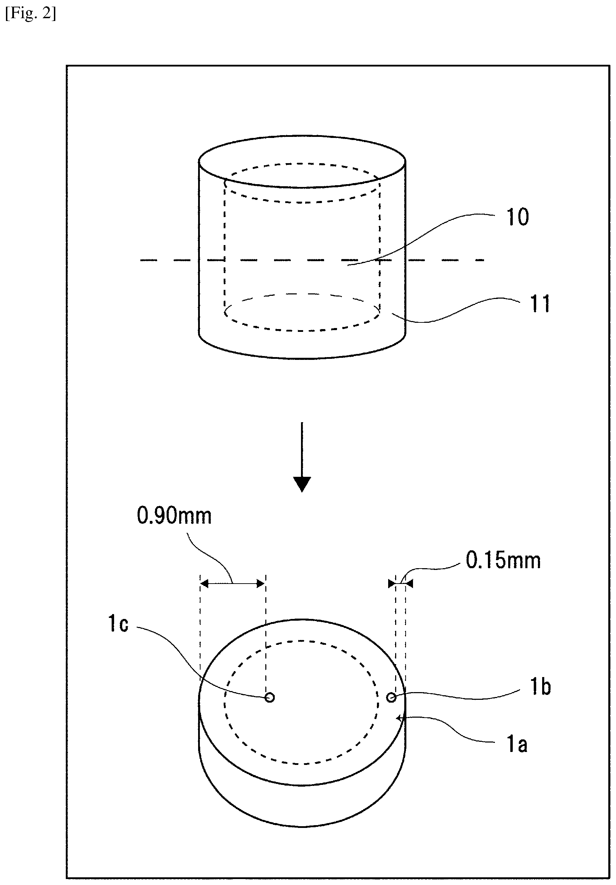

Subsequently, the pellet after being stored for a predetermined period was cut as illustrated in FIG. 2 to obtain a cut surface 1a. In the cut surface 1a, the following observation areas were observed with an optical microscope to check for contaminants. It was a single area (1b in FIG. 2) located 0.15 mm from the outer circumferential surface of the pellet that was to be observed. In this example, an amber-colored matter with a size of 0.01 mm or more in the observation area was regarded as a contaminant generated by cross-linking or resin degradation. A case where no contaminant was observed on the surface of the pellet was evaluated as "2A", indicating excellent long-term preservability, and a case where a contaminant was observed was evaluated as "1A", indicating poor long-term preservability. The hot set tests 1 and 2 described below were not performed on the sample evaluated as 1A.

### (Evaluation method 2: Hot set test 1)

The sheet sample (test piece) was produced using the pellet which had undergone the accelerated degradation test. The sheet sample was obtained by extrusion molding of the pellet, which had been molten by heating at 120°C, into a sheet having a thickness of 1 mm. In the evaluation method 2, the extrusion time for the sheet sample was set to 5 minutes. Next, the sheet was held at 180°C for 30 minutes to produce a cross-linked sheet sample.

After cross-linking, the hot set test 1 was performed in accordance with JIS C3667: 2008. The sheet sample was suspended in an oven heated to 200°C, and a weight was attached to the bottom of the sheet sample to apply a load of 20 N/cm² to the sheet sample. After the temperature in the oven had recovered, the sheet sample was held in the oven for 15 minutes. At that time, the elongation of the sheet sample in the hot set test 1 was measured relative to the sheet sample before the hot set test 1. In the evaluation method 2, a case where the elongation of the sheet sample was less than 175% was evaluated as "2B", indicating acceptable, and a case where the elongation of the sheet sample was 175% or more was evaluated as "1B", indicating unacceptable.

### (Evaluation method 3: Hot set test 2)

In the evaluation method 3, the sheet sample was produced in the same manner as in the evaluation method 2, except that the extrusion time for the sheet sample was set to 30 seconds. The evaluation method 3 has shorter extrusion time, and thus corresponds to a situation of the actual extrusion step of the insulation layer of the power cable where the linear speed is increased.

In evaluation method 3, the hot set test 2 was performed in the same manner as the hot set test 1. In the evaluation method 3, a case where the elongation of the sheet sample was less than 175% was evaluated as "2C", indicating acceptable, and a case where the elongation of the sheet sample was 175% or more was evaluated as "1C", indicating unacceptable.

The evaluation results of Samples 1 to 8 are shown in Table 2.

**[Table 2]**

| | | | Sample | | | | | | | |
|---|---|---|---|---|---|---|---|---|---|---|
| | | | 1 | 2 | 3 | 4 | 5 | 6 | 7 | 8 |
| | Content of cross-linking agent per 100 mass% of LDPE in entire pellet (mass%) | | 3 | | | | | | | |
| | Central portion 10 | Content of LDPE (mass%) | 100 | | | | | | | |
| | | Content of C=C bond per 1000 carbon atoms in LDPE: C | 0.37 | | | | | | | |
| | | Type of cross-linking agent | CA1 | | | | | | | |
| | | Content of cross-linking agent per 100 mass% of LDPE: A | 6 | 5.25 | 4.5 | 3.75 | 3.38 | 3.15 | 3 | 2.25 |
| | Outer circumferential portion 11 | Content of LDPE (mass%) | 100 | | | | | | | |
| Pellet | | Content of C=C bond per 1000 carbon atoms in LDPE: D | 0.37 | | | | | | | |
| | | Type of cross-linking agent | CA1 | | | | | | | |
| | | Content of cross-linking agent per 100 mass% of LDPE: B | 0 | 0.75 | 1.5 | 2.25 | 2.52 | 2.86 | 3 | 3.75 |
| | B/A | | 0 | 0.14 | 0.33 | 0.60 | 0.75 | 0.91 | 1.00 | 2.00 |
| | D/C | | 1 | 1 | 1 | 1 | 1 | 1 | 1 | 1 |
| | (C/A)/(D/B) | | 0 | 0.14 | 0.33 | 0.60 | 0.75 | 0.91 | 1.00 | 1.67 |
| Evaluation | Accelerated degradation test | | 2A | 2A | 2A | 2A | 2A | 2A | 1A | 1A |
| | Hot set test 1 | | 2B | 2B | 2B | 2B | 2B | 2B | - | - |
| | Hot set test 2 | | 1C | 1C | 2C | 2C | 2C | 2C | - | - |

### (Sample 1 and 2)

In Samples 1 and 2, the content of the cross-linking agent in the outer circumferential portion 11 is excessively less than the content of the cross-linking agent in the central portion 10, that is, (C/A)/(D/B) < 0.32. For this reason, the elongation in Samples 1 and 2 was excessively large in the hot set test 2, where the extrusion time was set to 30 seconds.

### (Samples 3 to 6)

In Samples 3 to 6, the content of the cross-linking agent and the content of carbon-carbon double bond in the outer circumferential portion 11 were the proper amounts, that is, 0.32 ≦ (C/A)/(D/B) ≦ 0.91. Accordingly, in Samples 3 to 6, the outer circumferential portion 11 after the accelerated degradation test contained no contaminant. Furthermore, in Samples 3 to 6, the sheet sample was sufficiently cross-linked in the subsequent cross-linking strep even when the extrusion time for the sheet sample was set to 30 seconds. As a result, in Samples 3 to 6, an excessive elongation in the hot set test 2 was suppressed.

### (Samples 7 and 8)

In Samples 7 and 8, the content of the cross-linking agent in the outer circumferential portion was not less than the content of the cross-linking agent in the central portion, and (C/A)/(D/B) > 0.91. Therefore, in Samples 7 and 8, the outer circumferential portion 11 after the accelerated degradation test contained contaminants.

### (2) Samples 4-0 to 4-7 of pellets

First, in the high-pressure method, a plurality of LDPEs different in the contents of carbon-carbon double bond were prepared by at least any one of the following: using the chain transfer agent, adjusting polymerization conditions (temperature, pressure), and the like.

Pellets blended in the same manner as Sample 4 described above were designated as Sample 4-0. On the other hand, in Samples 4-1 to 4-7, the pellets were produced in the same manner as Sample 4-0, except that LDPE was blended in which the content of carbon-carbon double bond in the outer circumferential portion 11 was different from the content of carbon-carbon double bond in the outer circumferential portion 11 of Sample 4-0. Specifically, in Samples 4-0 to 4-7, D/C was changed within a range of 0.59 or more and 2.16 or less while satisfying B/A = 0.6. These samples were evaluated in the same manner as in (1). Table 3 shows the evaluation results of Samples 4-0 to 4-7.

**[Table 3]**

| | | | Sample | | | | | | | |
|---|---|---|---|---|---|---|---|---|---|---|
| | | | 4-1 | 4-2 | 4-3 | 4-0 | 4-4 | 4-5 | 4-6 | 4-7 |
| | Content of cross-linking agent per 100 mass% of LDPE in entire pellet (mass%) | | 3 | | | | | | | |
| | Central portion 10 | Content of LDPE (mass%) | 100 | | | | | | | |
| | | Content of C=C bond per 1000 carbon atoms in LDPE: C | 0.37 | 0.37 | 0.37 | 0.37 | 0.37 | 0.37 | 0.37 | 0.37 |
| | | Type of cross-linking agent | CA1 | | | | | | | |
| | | Content of cross-linking agent per 100 mass% of LDPE: A | 3.75 | 3.75 | 3.75 | 3.75 | 3.75 | 3.75 | 3.75 | 3.75 |
| | Outer circumferential portion 11 | Content of LDPE (mass%) | 100 | | | | | | | |
| Pellet | | Content of C=C bond per 1000 carbon atoms in LDPE: D | 0.22 | 0.25 | 0.3 | 0.37 | 0.5 | 0.6 | 0.7 | 0.8 |
| | | Type of cross-linking agent | CA1 | | | | | | | |
| | | Content of cross-linking agent per 100 mass% of LDPE: B | 2.25 | 2.25 | 2.25 | 2.25 | 2.25 | 2.25 | 2.25 | 2.25 |
| | B/A | | 0.6 | 0.6 | 0.6 | 0.6 | 0.6 | 0.6 | 0.6 | 0.6 |
| | D/C | | 0.59 | 0.68 | 0.81 | 1 | 1.35 | 1.62 | 1.89 | 2.16 |
| | (C/A)/(D/B) | | 1.01 | 0.89 | 0.74 | 0.60 | 0.44 | 0.37 | 0.32 | 0.28 |
| Evaluation | Accelerated degradation test | | 2A | 2A | 2A | 2A | 2A | 2A | 2A | 1A |
| | Hot set test 1 | | 2B | 2B | 2B | 2B | 2B | 2B | 2B | - |
| | Hot set test 2 | | 1C | 2C | 2C | 2C | 2C | 2C | 2C | - |

### (Sample 4-1)

In Sample 4-1, the content of carbon-carbon double bond in the outer circum- ferential portion 11 is excessively less than the content of carbon-carbon double bond in the central portion 10, that is, (C/A)/(D/B) > 0.91. For this reason, the elongation in Sample 4-1 was excessively large in the hot set test 2, where the extrusion time was set to 30 seconds.

### (Samples 4-0, and 4-2 to 4-6)

In Samples 4-0, and 4-2 to 4-6, the content of the cross-linking agent and the content of carbon-carbon double bond in the outer circumferential portion 11 were the proper amounts, that is, 0.32 ≦ (C/A)/(D/B) ≦ 0.91. Accordingly, in Samples 4-0, and 4-2 to 4-6, the outer circumferential portion 11 after the accelerated degradation test contained no contaminant. Furthermore, in Samples 4-0, and 4-2 to 4-6, the sheet sample was sufficiently cross-linked in the subsequent cross-linking strep even when the extrusion time for the sheet sample was set to 30 seconds. As a result, in Samples 4-0, and 4-2 to 4-6, an excessive elongation in the hot set test 2 was suppressed.

### (Sample 4-7)

In Sample 4-7, the content of carbon-carbon double bond in the outer circumferential portion was excessively more than the content of carbon-carbon double bond in the central portion, that is, (C/A)/(D/B) < 0.32. Therefore, in Sample 4-7, the outer circumferential portion 11 after the accelerated degradation test contained contaminants.

### (3) Samples 9 to 14 of pellets

Samples 9 to 14 were produced by the above-mentioned coating method. Table 3 shows conditions for the resin preparation step, the first molding step, and the second molding step in the coating method. Samples 9 to 14 contain the same LDPE as that in Sample 4, and the following cross-linking agents:
a cross-linking agent in Sample 9, CA2: t-butyldicumyl peroxide,
a cross-linking agent in Sample 10, CA3: di(t-butyl peroxide),
a cross-linking agent in Sample 11, CA4: 2,5-dimethyl-2,5-di(t-butylperoxy)hexane,
a cross-linking agent in Sample 12, CA5: 1,3-bis(t-butylperoxyisopropyl)benzene,
a cross-linking agent in Sample 13, CA6: butyl 4,4-bis[(t-butyl)peroxy]pentanoate, and
a cross-linking agent in Sample 14, CA7:
   1,1-bis(1,1-dimethylethylperoxy)cyclohexane.

**[Table 4]**

| | | | Sample | | | | | |
|---|---|---|---|---|---|---|---|---|
| | | | 9 | 10 | 11 | 12 | 13 | 14 |
| Resin preparation step | First resin composition | Content of LDPE (mass%) | 100 | | | | | |
| | | Type of cross-linking agent | CA2 | CA3 | CA4 | CA5 | CA6 | CA7 |
| | | Content of cross-linking agent per 100 mass% of LDPE: A | 3.75 | | | | | |
| | | Content of C=C bond per 1000 carbon atoms in LDPE: C | 0.37 | | | | | |
| | Second resin composition | Content of LDPE (mass%) | 100 | | | | | |
| | | Type of cross-linking agent | CA2 | CA3 | CA4 | CA5 | CA6 | CA7 |
| | | Content of cross-linking agent per 100 mass% of LDPE: B | 2.25 | | | | | |
| | | Content of C=C bond per 1000 carbon atoms in LDPE: D | 0.37 | | | | | |
| First molding step | Production condition | Temperature of first resin composition during extrusion (°C) | 80 | | | | | |
| | State of central portion 10 | Shape | Cylindrical | | | | | |
| | | Diameter (mm) | 2.4 | | | | | |
| | | Length (mm) | 2.4 | | | | | |
| | | Volume (mm³) | 10.8 | | | | | |
| Second molding step | Production condition | Temperature of second resin composition during application (°C) | 80 | | | | | |
| | | Method of forming outer circumferential portion 11 | Application | | | | | |
| | State of outer circumferential portion 11 | Thickness (mm) | 0.3 | | | | | |
| | | Volume (mm³) | 10.3 | | | | | |

Sample 9 to 14 were evaluated in the same manner as in (1) and (2). Table 5 shows the evaluation results.

**[Table 5]**

| | | | Sample | | | | | |
|---|---|---|---|---|---|---|---|---|
| | | | 9 | 10 | 11 | 12 | 13 | 14 |
| | Content of cross-linking agent per 100 mass% of LDPE in entire pellet (mass%) | | 3 | | | | | |
| | Central portion 10 | Content of LDPE (mass%) | 100 | | | | | |
| | | Type of cross-linking agent | CA2 | CA3 | CA4 | CA5 | CA6 | CA7 |
| | | Content of cross-linking agent per 100 mass% of LDPE: A | 3.75 | 3.75 | 3.75 | 3.75 | 3.75 | 3.75 |
| | | Content of C=C bond per 1000 carbon atoms in LDPE: C | 0.37 | 0.37 | 0.37 | 0.37 | 0.37 | 0.37 |
| | Outer circumferential portion 11 | Content of LDPE (mass%) | 100 | | | | | |
| Pellet | | Type of cross-linking agent | CA2 | CA3 | CA4 | CA5 | CA6 | CA7 |
| | | Content of cross-linking agent per 100 mass% of LDPE: B | 2.25 | 2.25 | 2.25 | 2.25 | 2.25 | 2.25 |
| | | Content of C=C bond per 1000 carbon atoms in LDPE: D | 0.37 | 0.37 | 0.37 | 0.37 | 0.37 | 0.37 |
| | B/A | | 0.6 | 0.6 | 0.6 | 0.6 | 0.6 | 0.6 |
| | D/C | | 1 | 1 | 1 | 1 | 1 | 1 |
| | (C/A)/(D/B) | | 0.6 | 0.6 | 0.6 | 0.6 | 0.6 | 0.6 |
| Evaluation | Accelerated degradation test | | 2A | 2A | 2A | 2A | 2A | 2A |
| | Hot set test 1 | | 2B | 2B | 2B | 2B | 2B | 2B |
| | Hot set test 2 | | 2C | 2C | 2C | 2C | 2C | 2C |

### (Sample 9 to 14)

In Samples 9 to 14, the types of the cross-linking agent were different from each other, and the contets of the cross-linking agent and carbon-carbon double bond in the outer circumferential portion 11 were the proper amounts, that is, 0.32 ≦ (C/A)/(D/B) ≦ 0.91. Accordingly, in Samples 9 to 14, the outer circumferential portion 11 after the accelerated degradation test contained no contaminant, Further, in Sample 9 to 14, an excessive elongation in the hot set test 2 was suppressed.

### (4) Samples 15 to 22 of pellets

Samples 15 to 22 were produced by the above-mentioned thermal diffusion method. Table 6 shows the conditions for the resin preparation step, the molding step, and the cooling step in the thermal diffusion method.

**[Table 6]**

| | | | Sample | | | | | | | |
|---|---|---|---|---|---|---|---|---|---|---|
| | | | 15 | 16 | 17 | 18 | 19 | 20 | 21 | 22 |
| Resin preparation step | First resin composition | Content of LDPE (mass%) | 100 | | | | | | | |
| | | Type of cross-linking agent | CA1 | | | | | | | |
| | | Content of cross-linking agent per 100 mass% of LDPE (mass%) | 3 | | | | | | | |
| | | Content of C=C bond per 1000 carbon atoms in LDPE | 0.37 | | | | | | | |
| Molding step | Production situation | Temperature of first resin composition during extrusion(°C) | 80 | | | | | | | |
| | State of resin composition that is linear at high temperature | Shape | Cylindrical | | | | | | | |
| | | Diameter (mm) | 3 | | | | | | | |
| | | Length (mm) | 3 | | | | | | | |
| | | Volume (mm³) | 21.2 | | | | | | | |
| Cooling step | Primary cooling substep | Fluid | CO₂ | | | | | | | |
| | | Temperature of fluid (°C) | 5 | | | | | | | |
| | | Cooling time (second) | 5 | 10 | 30 | 60 | 120 | 300 | 600 | 1200 |
| | Secondary cooling substep | Atmosphere | Air | | | | | | | |
| | | Temperature of atmosphere(°C) | 25 | | | | | | | |

Samples 15 to 22 were evaluated in the same manner as in (1) to (3). Table 7 shows the evaluation results of Samples 15 to 22.

For Samples 15 to 22, the content of the cross-linking agent and the content of carbon-carbon double bond in the central portion 10 and the outer circumferential portion 11 were measured by FT-IR. Specifically, each pellet was cut as illustrated in FIG. 2. Then, in the cut surface 1a, FT-IR measurement was performed at a position (1b in FIG. 2) at a depth of 0.15 mm from the outer circumferential surface and at a position (1c in FIG. 2) at a depth of 0.90 mm from the outer circumferential surface to obtain the contents of the cross-linking agent and carbon-carbon double bond at each position. The content at the position at the depth of 0.15 mm was taken as the content in the outer circumferential portion 11, and the content at the position at the depth of 0.90 mm was taken as the content in the central portion 10. The content of carbon-carbon double bond at each position was determined based on a calibration curve prepared using as a standard sample LDPE in which the content of carbon-carbon double bond is known by ¹H-NMR analysis.

**[Table 7]**

| | | | Sample | | | | | | | |
|---|---|---|---|---|---|---|---|---|---|---|
| | | | 15 | 16 | 17 | 18 | 19 | 20 | 21 | 22 |
| | Content of cross-linking agent per 100 mass% of LDPE in entire pellet (mass%) | | 3 | | | | | | | |
| | Central portion 10 | Content of LDPE (mass%) | 100 | | | | | | | |
| | | Type of cross-linking agent | CA1 | | | | | | | |
| | | Content of cross-linking agent per 100 mass% of LDPE: A | 3 | 3 | 3.3 | 3.3 | 3.3 | 3 | 3 | 3 |
| | | Content of C=C bond per 1000 carbon atoms in LDPE: C | 0.37 | 0.37 | 0.37 | 0.37 | 0.37 | 0.37 | 0.37 | 0.37 |
| | Outer circumferential portion 11 | Content of LDPE (mass%) | 100 | | | | | | | |
| Pellet | | Type of cross-linking agent | CA1 | | | | | | | |
| | | Content of cross-linking agent per 100 mass% of LDPE: B | 3 | 3 | 2.6 | 2.6 | 2.6 | 3 | 3 | 3 |
| | | Content of C=C bond per 1000 carbon atoms in LDPE: D | 0.37 | 0.37 | 0.37 | 0.37 | 0.37 | 0.37 | 0.37 | 0.37 |
| | B/A | | 1 | 1 | 0.79 | 0.79 | 0.79 | 1 | 1 | 1 |
| | D/C | | 1 | 1 | 1 | 1 | 1 | 1 | 1 | 1 |
| | (C/A)/(D/B) | | 1 | 1 | 0.79 | 0.79 | 0.79 | 1 | 1 | 1 |
| Evaluation | Accelerated degradation test | | 1A | 1A | 2A | 2A | 2A | 1A | 1A | 1A |
| | Hot set test 1 | | - | - | 2B | 2B | 2B | - | - | - |
| | Hot set test 2 | | - | - | 2C | 2C | 2C | - | - | - |

### (Sample 15 and 16)

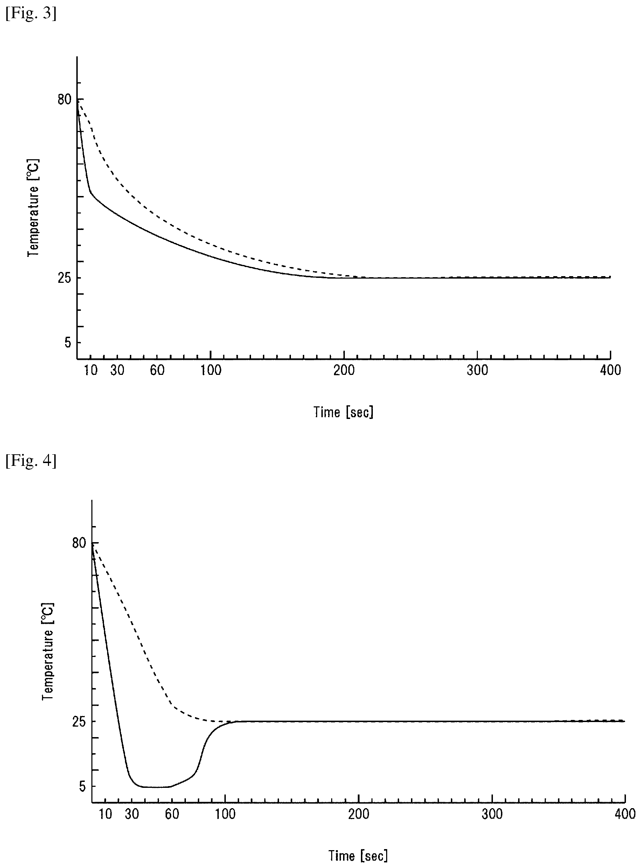

As shown in Table 7, in Samples 15 and 16, the content of the cross-linking agent in the outer circumferential portion 11 was the same as that in the central portion 10. This is probably because the temperatures in the central portion 10 and the outer circumferential portion 11 changed as illustrated in FIG. 3. FIG. 3 is a diagram illustrating the expected temperature changes in the outer circumferential portion and the central portion when cooling (primary cooling substep and secondary cooling substep) is applied to Sample 16. In the figure, a dashed line indicates the expected temperature change in the central portion 10, and a solid line indicates the expected temperature change in the outer circumferential portion 11.

Specifically, as illustrated in FIG. 3, since the primary cooling substep was short in time, the temperature in the outer circumferential portion 11 did not decrease sufficiently in the primary cooling substep. Specifically, in the primary cooling substep, the temperatures in the central portion 10 and the outer circumferential portion 11 decreased sharply until 10 seconds after the start of cooling, but the temperatures both in the central portion 10 and the outer circumferential portion 11 were relatively high. In the secondary cooling substep, the temperature decreased gradually both in the central portion 10 and the outer circumferential portion 11, the temperature difference between the outer circumferential portion 11 and the central portion 10 was small, and no thermal diffusion of the cross-linking agent from the outer circumferential portion 11 into the central portion 10 is presumed to occur.

In Samples 15 and 16, B/A = 1 and D/C = 1, that is, (C/A)/(D/B) > 0.91. In Samples 15 and 16, the outer circumferential portion 11 after the accelerated degradation test contained contaminants.

### (Samples 17 to 19)

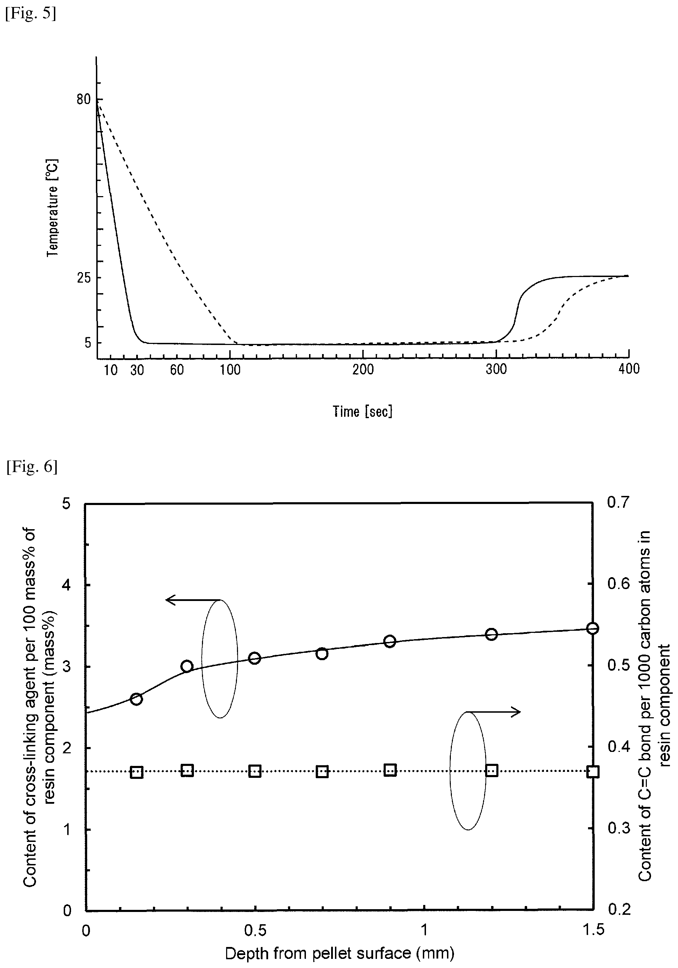

For Sample 17, the changes in the content of the cross-linking agent and in the content of carbon-carbon double bond were measured from the surface of the pellet toward the depth direction by FT-IR, and then the changes illustrated in FIG. 6 were observed. FIG. 6 illustrates the content of the cross-linking agent and the content of carbon-carbon double bond determined by measurement by FT-IR at positions at depths of 0.15 mm, 0.3 mm, 0.5 mm, 0.7 mm, 0.9 mm, 1.2 mm, and 1.5 mm from the outer circumferential surface on the cut surface 1a obtained by cutting a pellet as illustrated in FIG. 2. The content of carbon-carbon double bond at each position was determined based on the calibration curve as mentioned above. In FIG. 6, a solid line indicates the change in the content of the cross-linking agent, and a dashed line indicates the change in the content of carbon-carbon double bond. As illustrated in FIG. 6, in Sample 17, it was observed that the content of the cross-linking agent was lower toward the surface of the pellet and the content of the cross-linking agent was increased toward the center of the pellet. On the other hand, it was observed that the content of carbon-carbon double bond exhibited no significant change in the depth direction of the pellet. It was observed that the content of the cross-linking agent changed in the depth direction in Samples 18 and 19 similarly to Sample 17.

In Samples 17 to 19, a region where the content of the cross-linking agent is not more than the average value for the entire pellet is taken as the outer circumferential portion, and a region where the content is more than the average value is taken as the central portion. The "average value for the entire pellet" means the content of the cross-linking agent per 100 mass% of LDPE in the entire pellet when the entire pellet of each sample is molten at 80°C and then cooled naturally, which is 3 mass% for the Samples 17 to 19. In Samples 17 to 19, since a region where the content of the cross-linking agent was 3 mass% or less was a region from the surface of the pellet to a depth of 0.3 mm, the region with a thickness of 0.3 mm was taken as the outer circumferential portion, and the region with a diameter of 2.4 mm, excluding the outer circumferential portion, was taken as the central portion.

As shown in Table 7 and FIG. 6, in Samples 17 to 19, the content of the cross-linking agent at a depth of 0.15 mm from the pellet surface in the outer circumferential portion 11 was less than the content of the cross-linking agent at a depth of 0.90 mm from the pellet surface in the central portion 10. This is probably because the temperatures in the central portion 10 and the outer circumferential portion 11 changed as illustrated in FIG. 4. FIG. 4 is a diagram illustrating the expected temperature changes in the outer circumferential portion 11 and the central portion 10 when cooling (primary cooling substep and secondary cooling substep) is applied to Sample 18. In the figure, a dashed line indicates the expected temperature change in the central portion 10, and a solid line indicates the expected temperature change in the outer circumferential portion 11.

Specifically, as illustrated in FIG. 4, since the primary cooling substep had appropriate length of time, the temperature in the outer circumferential portion 11 decreased greatly in the primary cooling substep. Specifically, the temperature in the outer circumferential portion 11 decreased to 5°C until 60 seconds after the start of cooling in the primary cooling substep. On the other hand, the temperature in the central portion 10 did not decrease as much as that in the outer circumferential portion 11, and the temperature difference between the outer circumferential portion 11 and the central portion 10 was large. Due to the large temperature difference between the outer circumferential portion 11 and the central portion 10, thermal diffusion of the cross-linking agent from the outer circumferential portion 11 to the central portion 10 is presumed to occur in the primary cooling substep.

In Samples 17 to 19, 0.32 ≦ B/A ≦ 0.91 and D/C = 1, that is, 0.32 ≦ (C/A)/(D/B) ≦ 0.91. Therefore, in Samples 17 to 19, the outer circumferential portion 11 after the accelerated degradation test contained no contaminant. Furthermore, in Samples 17 to 19, an excessive elongation in the hot set test 2 was suppressed.

### (Samples 20 to 22)

In Samples 20 to 22, the content of the cross-linking agent in the outer circumferential portion 11 was the same as that in the central portion 10, as shown in Table 7. This is probably because the temperatures in the central portion 10 and the outer circumferential portion 11 changed as illustrated in FIG. 5. FIG. 5 is a diagram illustrating the expected temperature changes in the outer circumferential portion and the central portion when cooling (primary cooling substep and secondary cooling substep) is applied to Sample 20. In the figure, a dashed line indicates the expected temperature change in the central portion 10, and a solid line indicates the expected temperature change in the outer circumferential portion 11.

Specifically, in the primary cooling substep, the temperatures in the central portion 10 and the outer circumferential portion 11 decreased to 5°C until 300 seconds after the start of cooling, as illustrated in FIG. 5. In this event, the temperature in the central portion 10 decreased more slowly than that in the outer circumferential portion 11: the temperature in the outer circumferential portion 11 decreased to 5°C, and after some time elapsed, the temperature in the central portion 10 also decreased to 5°C. Therefore, there was a period in which the temperature difference between the outer circumferential portion 11 and the central portion 10 became large, causing thermal diffusion of the cross-linking agent from the outer circumferential portion 11 to the central portion 10. On the other hand, in the secondary cooling substep, the temperature in the outer circumferential portion 11 rose from 5°C to 25°C, and, after some time elapsed, the temperature in the central portion 10 also rose to 25°C. During this process, the temperature in the outer circumferential portion 11 became higher than the temperature in the central portion 10, generating a predetermined temperature difference. Accordingly, thermal diffusion of the cross-linking agent occurs from the central portion 10 toward the outer circumferential portion 11. Consequently, during the cooling step, no thermal diffusion of the cross-linking agent is presumed to occur.

In Samples 20 to 22, B/A = 1 and D/C = 1, that is, (C/A)/(D/B) > 0.91. Therefore, in Samples 20 to 22, the outer circumferential portion 11 after the accelerated degradation test contained contaminants.

As described above, the pellet disclosed herein is a pellet including a resin component containing unsaturated polyethylene, and a cross-linking agent, the pellet including a central portion and an outer circumferential portion located on an outer circumference of the central portion, wherein the central portion and the outer circumferential portion satisfy expression (1): $0.32 ≦ \left(C/A\right) / \left(D/B\right) ≦ 0.91$ (1).

Since the central portion 10 and the outer circumferential portion 11 satisfy expression (1), the pellet is less likely to degrade upon a long term storage. The power cable produced using the pellet has a good electrical insulation. Since the method of producing the power cable is disclosed, for example, in Japanese Patent Laid-Open Publication No. 2020-132817 and US2020/0270426, it is not explained here.

Since the central portion 10 and the outer circumferential portion 11 satisfy expression (1), the cross-linking agent and carbon-carbon double bond in the resin component can be sufficiently dispersed in an extruder during the extrusion step where the linear speed is increased. Accordingly, local decrease in the degree of cross-linking in the insulation layer can be suppressed. As a result, even when the insulation layer is heated, excessive elongation of the insulation layer can be suppressed.

In the pellet 1, the ratio B/A of the content B of the cross-linking agent in the outer circumferential portion 11 to the content A of the cross-linking agent in the central portion 10 is not limited to the values in Examples. However, the central portion 10 and the outer circumferential portion 11 may satisfy expression (2): $0.32 ≦ B / A ≦ 0.91$ (2).

In the pellet 1, the ratio D/C of the content D of carbon-carbon double bond in the outer circumferential portion 11 to the content C of carbon-carbon double bond in the central portion 10 is not limited to the values in Examples. However, the central portion 10 and the outer circumferential portion 11 may satisfy expression (3): $0.66 ≦ D / C ≦ 1.89$ (3).

In the pellet 1, the content B of the cross-linking agent in the outer circumferential portion 11 is not particularly limited. However, the outer circumferential portion 11 may satisfy 1.45 ≦ B ≦ 2.86.

In the pellet 1, the content D of carbon-carbon double bond in the outer circumferential portion 11 is not particularly limited. However, the outer circumferential portion 11 may satisfy 0.25 ≦ D ≦ 0.70.

As mentioned above, by adjusting at least any one of B/A, D/C, B, and D, the central portion 10 and the outer circumferential portion 11 that satisfy expression (1) can be stably formed. As a result, the long-term preservability of the pellet 1 can be stably improved and the local decrease in the degree of cross-linking in the insulation layer of the power cable can be stably suppressed.

In order to sufficiently cross-link the resin component, the content A of the cross-linking agent in the central portion 10 may be 1 mass% or more with respect to the resin component included in the central portion being 100 mass%. In order to prevent the resin component after cross-linking from containing a large amount of by-products of the cross-linking, the content A of the cross-linking agent in the central portion 10 may be 1 mass% or more and 10 mass% or less with respect to the resin component included in the central portion being 100 mass%.

A thickness of the outer circumferential portion 11 is not restricted to 0.3 mm disclosed in Examples. In order to prevent the central portion 10 from degrading, it is enough for the outer circumferential portion 11 to have a thickness of 0.1 mm or more and 1 mm or less. A size (diameter) of the central portion 10 is not restricted to 2.4 mm disclosed in Examples. The diameter of the central portion 10 is preferably 1.8 mm or more and 6.0 mm or less. The diameter of the pellet 1 is not restricted to 3 mm disclosed in Examples. The diameter of the pellet 1 is preferably 2.0 mm or more and 8.0 mm or less.

For the contents of the cross-linking agent in the outer circumferential portion and in the central portion in the pellet produced by the thermal diffusion method, positions at depths of 0.15 mm and 0.9 mm from the pellet surface were respectively selected in Examples, but not limited thereto. As the measurement position of the outer circumferential portion, the middle of the thickness of the outer circumferential portion may be selected. As the measurement position of the central portion, the middle between the surface of the central portion and the center may be selected.

### Reference Signs List

1 Pellet
10 Central portion
11 Outer circumferential portion

## Claims

1. A pellet including a resin component containing unsaturated polyethylene, and a cross-linking agent,
the pellet comprising a central portion and an outer circumferential portion located on an outer circumference of the central portion,
wherein the outer circumferential portion is a region where the content of the cross-linking agent is not more than an average value of the content of the cross-linking agent in the entire pellet, and the central portion is a region where the content of the cross-linking agent is more than the average value,
wherein the average value of the content of the cross-linking agent in the entire pellet is determined according to the description,
wherein the central portion and the outer circumferential portion satisfy expression (1): $0.32 ≦ \left(C/A\right) / \left(D/B\right) ≦ 0.91$ (1)
where
A indicates a content, expressed in mass%, of the cross-linking agent per 100 mass% of the resin component included in the central portion,
B indicates a content, expressed in mass%, of the cross-linking agent per 100 mass% of the resin component included in the outer circumferential portion,
C indicates a content of carbon-carbon double bond per 1000 carbon atoms in the resin component included in the central portion,
D indicates a content of carbon-carbon double bond per 1000 carbon atoms in the resin component included in the outer circumferential portion,
wherein A and B are calculated by measuring a cut surface, cut out from the pellet, by Fourier transform infrared spectroscopy or Raman scattering method, and
wherein C and D are calculated by measuring a cut surface, cut out from the pellet, by Fourier transform infrared spectroscopy.

2. The pellet according to claim 1,
wherein the central portion and the outer circumferential portion satisfy expression (2): $0.32 ≦ B / A ≦ 0.91$ (2).

3. The pellet according to claim 1 or 2,
wherein the central portion and the outer circumferential portion satisfy expression (3): $0.66 ≦ D / C ≦ 1.89$ (3).

4. The pellet according to any one of claims 1 to 3,
wherein the outer circumferential portion satisfies the following expression: $1.45 ≦ B ≦ 2.86 .$

5. The pellet according to any one of claims 1 to 4,
wherein the outer circumferential portion satisfies the following expression: $0.25 ≦ D ≦ 0.70 .$

6. The pellet according to any one of claims 1 to 5,
wherein a thickness of the outer circumferential portion is 0.1 mm or more and 1 mm or less.

## Patentansprüche

1. Pellet, umfassend eine Harzkomponente, die ungesättigtes Polyethylen enthält, und ein Vernetzungsmittel,
wobei das Pellet einen zentralen Abschnitt und einen an einem Außenumfang des zentralen Abschnitts angeordneten äußeren Umfangsabschnitt umfasst,
wobei der äußere Umfangsabschnitt ein Bereich ist, in dem der Gehalt an Vernetzungsmittel nicht größer als ein Mittelwert des Gehalts an Vernetzungsmittel in dem gesamten Pellet ist, und der zentrale Abschnitt ein Bereich ist, in dem der Gehalt an Vernetzungsmittel größer als der Mittelwert ist,
wobei der Mittelwert des Gehalts an Vernetzungsmittel gemäß der Beschreibung bestimmt wird,
wobei der zentrale Abschnitt und der äußere Umfangsabschnitt Ausdruck (1) erfüllen: $0 , 32 \leq \left(C/A\right) / \left(D/B\right) \leq 0 , 91$ (1)
wobei
A einen Gehalt, ausgedrückt in Masse-%, des Vernetzungsmittels pro 100 Masse-% der in dem zentralen Abschnitt enthaltenen Harzkomponente angibt,
B einen Gehalt, ausgedrückt in Masse-%, des Vernetzungsmittels pro 100 Masse-% der in dem äußeren Umfangsabschnitt enthaltenen Harzkomponente angibt,
C einen Gehalt an Kohlenstoff-Kohlenstoff-Doppelbindungen pro 1000 Kohlenstoffatome in der in dem zentralen Abschnitt enthaltenen Harzkomponente angibt,
D einen Gehalt an Kohlenstoff-Kohlenstoff-Doppelbindungen pro 1000 Kohlenstoffatome in der in dem äußeren Umfangsabschnitt enthaltenen Harzkomponente angibt,
wobei A und B durch Messen einer aus dem Pellet herausgeschnittenen Schnittfläche mittels Fourier-Transformations-Infrarotspektroskopie oder eines Raman-Streuverfahrens berechnet werden, und
wobei C und D durch Messen einer aus dem Pellet herausgeschnittenen Schnittfläche mittels Fourier-Transformations-Infrarotspektroskopie berechnet werden.

2. Pellet nach Anspruch 1,
wobei der zentrale Abschnitt und der äußere Umfangsabschnitt Ausdruck (2) erfüllen: $0 , 32 \leq B / A \leq 0,91$ (2).

3. Pellet nach Anspruch 1 oder 2,
wobei der zentrale Abschnitt und der äußere Umfangsabschnitt Ausdruck (3) erfüllen: $0 , 66 \leq D / C \leq 1,89$ (3).

4. Pellet nach einem der Ansprüche 1 bis 3,
wobei der äußere Umfangsabschnitt den folgenden Ausdruck erfüllt: $1 , 45 \leq B \leq 2 , 86 .$

5. Pellet nach einem der Ansprüche 1 bis 4,
wobei der äußere Umfangsabschnitt den folgenden Ausdruck erfüllt: $0 , 25 \leq D \leq 0 , 70 .$

6. Pellet nach einem der Ansprüche 1 bis 5,
wobei eine Dicke des äußeren Umfangsabschnitts 0,1 mm oder mehr und 1 mm oder weniger beträgt.

## Revendications

1. Pastille comprenant un composant de résine contenant du polyéthylène insaturé, et un agent de réticulation,
la pastille comprenant une partie centrale et une partie périphérique extérieure située sur une périphérie extérieure de la partie centrale,
dans laquelle la partie périphérique extérieure est une région dans laquelle la teneur en agent de réticulation n'est pas supérieure à une valeur moyenne de la teneur en agent de réticulation dans la pastille entière, et la partie centrale est une région dans laquelle la teneur en agent de réticulation est supérieure à la valeur moyenne,
dans laquelle la valeur moyenne de la teneur en agent de réticulation est déterminée conformément à la description,
dans laquelle la partie centrale et la partie périphérique extérieure satisfont à l'expression (1) : $0 , 32 \leq \left(C/A\right) / \left(D/B\right) \leq 0 , 91$ (1)
où
A indique une teneur, exprimée en % en masse, de l'agent de réticulation pour 100 % en masse du composant de résine contenu dans la partie centrale,
B indique une teneur, exprimée en % en masse, de l'agent de réticulation pour 100 % en masse du composant de résine contenu dans la partie périphérique extérieure,
C indique une teneur en doubles liaisons carbone-carbone pour 1000 atomes de carbone dans le composant de résine contenu dans la partie centrale,
D indique une teneur en doubles liaisons carbone-carbone pour 1000 atomes de carbone dans le composant de résine contenu dans la partie périphérique extérieure,
dans laquelle A et B sont calculés en mesurant une surface de coupe, découpée dans la pastille, par spectroscopie infrarouge à transformée de Fourier ou par une méthode de diffusion Raman, et
dans laquelle C et D sont calculés en mesurant une surface de coupe, découpée dans la pastille, par spectroscopie infrarouge à transformée de Fourier.

2. Pastille selon la revendication 1,
dans laquelle la partie centrale et la partie périphérique extérieure satisfont à l'expression (2) : $0 , 32 \leq B / A \leq 0,91$ (2).

3. Pastille selon la revendication 1 ou 2,
dans laquelle la partie centrale et la partie périphérique extérieure satisfont à l'expression (3) : $0 , 66 \leq D / C \leq 1,89$ (3).

4. Pastille selon l'une quelconque des revendications 1 à 3,
dans laquelle la partie périphérique extérieure satisfait à l'expression suivante : $1 , 45 \leq B \leq 2 , 86 .$

5. Pastille selon l'une quelconque des revendications 1 à 4,
dans laquelle la partie périphérique extérieure satisfait à l'expression suivante : $0 , 25 \leq D \leq 0 , 70 .$

6. Pastille selon l'une quelconque des revendications 1 à 5,
dans laquelle une épaisseur de la partie périphérique extérieure est de 0,1 mm ou plus et de 1 mm ou moins.
